# EUROPEAN PATENT APPLICATION

(11) **EP 2 705 999 A1**
(43) Date of publication of application: **12.03.2014**
(21) Application number: 12183558.1
(22) Date of filing: 07.09.2012
(51) Int. Cl.: B62J 6/20

(54) **Composite reflector**

(71) Applicant: Illinois Tool Works, Inc., Glenview, IL 60026 (US)
(72) Inventor: Verhoef, Peter, 2986 EV Ridderkerk (NL)
(74) Representative: Meissner, Bolte & Partner

(57) **Abstract**

A composite reflector (100) for assembly on a part of a vehicle is provided. In order to obtain a reliable reflector which is easily mounted, the composite reflector (100) comprises at least one reflective layer (10) and at least one fixation layer (30), wherein at least one first portion (11) of the at least one reflective layer (10) extends within a first substantially flat plane, wherein at least one second portion (12) of the at least one reflective layer (10) extends within a second substantially flat plane (B), and wherein the first and the second substantially flat planes (A, B) are substantially parallel to one another.

## Description

The invention relates to a composite reflector designed and constructed to be mounted on a part of vehicle, in particular on a lateral part of a vehicle and preferably at the spokes of a bicycle wheel.

Reflectors for the lateral part of vehicles, in particular for assembly on the spokes of a bicycle wheel, are well known from the art. One kind of conventional reflectors is made of a hard plastic backing, onto which a hard plastic or glass reflective shield is attached. The plastic backing and the reflective shield are commonly connected to one another by mechanical connecting means, such as bolts or mechanical hooks. Mounting of those hard plastic reflectors within the spokes of a bicycle wheel is performed mechanically by connection means such as bolts or iron nails; alternatively, the conventional hard plastic reflectors are equipped with clips, wherein the reflectors are slid in between the spokes of the bicycle wheel such that the clips intertwine with a pair of spokes which are located, at least partially, at a suitable distance from each other, such that the conventional hard plastic reflector is sufficiently secured.

Another kind of conventional reflectors consists essentially of a reflective layer being reflective on at least one of its sides, wherein the underside of the reflective layer is equipped with an adhesive. Usually, the adhesive is covered with a suitable liner paper, which is removed just before assembly of this kind of a conventional reflector.

Both kinds of conventional reflectors, i.e. both hard plastic/glass reflectors and reflector tapes comprising at least one reflective layer and one adhesive layer suffer from the problem that optimal reflection only occurs when they are illuminated by light impacting onto the conventional reflectors at an angle of about 90°. Hence, when mounted on the side of a vehicle and in particular on the spokes of a bicycle wheel, reflection is severely limited when those conventional reflectors are illuminated from a diagonal angle, i.e. from an angled position behind or ahead of the vehicle.

Furthermore, when reflectors with solid shields are used i.e. in between the spokes of a vehicle, such solid reflective shields may break upon traffic impact, leading to possible injuries of the cyclists or passersby. Additionally, when such conventional reflectors brake upon traffic impact, they do not longer contribute to visual safety.

With respect to those problems in the prior art, the object of the invention was to alleviate these disadvantages of the prior-art solutions, in particular by providing a composite reflector for assembly on a part of a vehicle which provides for easy application and assembly and which increases road safety.

In accordance with the current invention, the problem is solved by providing a composite reflector according to independent claim 1.

The problem is particularly solved by providing a composite reflector for assembly on a part of a vehicle, in particular on a lateral part of a vehicle and preferably at the spokes of a bicycle wheel, wherein the composite reflector comprises at least one reflective layer and at least one fixation layer, wherein at least one first portion of the at least one reflective layer extends within a first substantially flat plane, wherein at least one second portion of the at least one reflective layer extends within a second substantially flat plane and wherein the first and the second substantially flat planes are substantially parallel to one another.

The advantages of a solution in accordance with the invention over the prior-art solutions are evident.

The inventive composite reflector still provides for reflecting light which impacts on the surface of the composite reflector in an angle of about 90°, i.e. substantially perpendicularly. Reflecting light impacting on the surface of the inventive composite reflector from this preferred direction provides for very good road safety and is in many cases necessary in order to fulfil various specifications. However, by providing at least one first portion within a first substantially flat plane and at least one second portion within a second substantially flat plane, wherein the planes are substantially parallel to one another (but not identical), a transition portion is formed between the at least one first portion and the at least one second portion, the transition portion connecting the at least one first portion to the at least one second portion. This (still reflective) transition portion provides for reflecting light which impacts on to the surface from various directions different from the preferred impact angle of 90°. In other words, due to the convex shape of the inventive composite reflector, i.e. in particular due to the transition portion, the scope of reflection is much more than the basically 90° of the prior-art solutions.

In addition, the weight of the material of the inventive composite reflector is approximately 60 % or even less when compared to a conventional (in particular hard-plastic) reflector. As a side-effect, due to the reduced weight, when a reflector is lost, it will not have a great impact to other vehicles or people upon road impact.

Advantageous embodiments are indicated in the sub-claims.

According to another aspect of the inventive composite reflector, the at least one first portion and the at least one second portion are merged into another by at least one transition portion, the at least one transition portion connecting the first portion and the second portion at a linear slope of less than 90°. Alternatively, the at least one transition portion connects the first portion and the second portion at a non-linear slope.

By connecting the first portion and the second portion at a linear slope of less than 90° or at a non-linear slope, the impact angles of light which is reflected by the reflective layer of the composite reflector can be increased to any direction in between an impact angle of 0° to 180°. In other words, due to the special transition portion, no "blind spot" is present anymore, i.e. light impacting at any diagonal angle from behind or ahead the vehicle is reflected on the at least one reflective layer of the inventive composite reflector.

According to another aspect of the invention, the composite reflector is adapted to provide a reflective range from 0° to 180° with respect to any of the substantially flat planes.

According to another aspect of the invention, the composite reflector further comprises at least one shaping layer. The at least one shaping layer is adapted to dislocate the at least one second portion of the at least one reflective layer outside the first substantially flat plane in order to make it extend within the second substantially flat plane.

In other words, the at least one shaping layer itself adapts the form or shape of a first portion and a second portion with an appropriate transition portion in between. By using a separate shaping layer, the construction and assembly of the composite reflector is simplified.

Preferably, the at least one shaping layer is located in between the at least one fixation layer and the at least one reflective layer. In particular, in case the at least one fixation layer is self-adhesive, by locating the at least one shaping layer in between the at least one fixation and the at least one reflective layer, no shape-forming preparation of the surface or the like on which the composite reflector is to be assembled is necessary, which further eases the use of the inventive composite reflector.

More preferably, the at least one shaping layer is made of a foam material, preferably an elastically deformable foam material. By equipping the inventive composite reflector with at least one shaping layer of a foam material, the desired shaping, in particular the desired slope angels and the like of the transition portions can be achieved easily. The foam material is preferably elastically deformable in order to make the composite reflector less destructible upon traffic impact, and to reduce possible injuries emanating from a hard, potentially not splinter-proof material.

According to another aspect of the present invention, the at least one reflective layer is made of an elastically deformable material. Particularly in case the reflective layer, the fixation layer and the shaping layer are made of an elastically deformable material, risk of injuries is further decreased and durability of the composite reflector, especially upon traffic impact or the like, is enhanced.

According to another aspect of the invention, the at least one reflective layer is a coloured reflective layer. The colour is at least one of a signal colour and in particular one of a signal colour commonly used in traffic signalling means. This way, road safety is increased even further.

According to another aspect of the invention, the at least one fixation layer comprises at least one of an adhesive, preferably one of a pressure sensitive adhesive, a butyl adhesive, an acrylic adhesive, a rubber-based adhesive or a silicone-based adhesive, or at least one of the loop side or the hook side of a hook-and-loop fixation means. For convenience, any such adhesive on the at least one fixation layer is preferably provided with a backing liner which is to be removed before assembly.

By using an adhesive on the at least one fixation layer, the inventive composite reflector is applicable on virtually any kind of vehicle surface and in addition, on any kind of spoke and non-spoke wheels such as bicycle wheels. In addition, the adhesive can be chosen such as to be adapted to the climate conditions the vehicle is located in. Furthermore, an improved consistent and durable mounting of the composite reflector on different materials, i.e. on steel and likewise on other kinds of surfaces, is ensured.

In addition, in this way, the composite reflector can be made flexible in a manner such that a mounting on an uneven surface is possible. This allows for easy and reliable adaption to the special shapes of surfaces the composite reflector is to be attached to.

Alternatively, the at least one fixation layer comprises at least one of the loop or the hook side of a hook-and-loop fixation means. This way, an easy attachment even to spokes of a bicycle wheel or the like is easily possible.

Alternatively, also a bend-over is possible: A portion of the at least one fixation layer may be equipped with hooks wherein another portion of the at least one fixation may be equipped with loops such that for example an end portion of the composite reflector may be bent around the spokes of a bicycle wheel and fixed to the spokes by the bend-over connection.

In this connection, it is to be noted that for such a bent-over solution, the at least one fixation layer may also be present in portions of the at least one reflective layer.

According to another aspect of the invention, all of the layers of the composite reflector are adapted to be cuttable in order to render the circumferential shape of the composite reflector user-definable. In other words, the dimension of the composite reflector can easily be customised depending on specific needs for a specific application. Particularly, different specifications such as standard may require specific shapes. By making the composite reflector cuttable as a whole, i.e. by making all of the layers of the composite reflector cuttable, an adaption to such standard specifications or the like is easily possible.

According to another aspect of the invention, the composite reflector is essentially straight-shaped. A straight-shaped reflector can be manufactured very easily.

Alternatively, the composite reflector is essentially bow-shaped.

An essentially bow-shaped composite reflector is essentially customised and committed to the function appropriate to a rotating wheel such as a bicycle wheel.

According to another aspect of the invention, the composite reflector comprises consecutively a first reflective layer having at least one first portion and at least one second portion, the portions each extending in different substantially flat planes, the planes being substantially parallel to one another, optionally a first shaping layer, a first fixation layer being at least partially equipped with one of hook elements or loop elements of a hook-and-loop fixation, a second fixation layer being at least partially equipped with the corresponding counterpart of either hook elements or loop elements used on the first fixation layer to form a detachable connection using these elements, optionally a second shaping layer, and a second reflective layer, the second reflective layer preferably having at least one first portion and at least one second portion, the portions preferably each extending in different substantially flat planes which are substantially parallel to one another.

In other words, the hooks or the loops on the first fixation layer and the corresponding loops or hooks on the second fixation layer may be detached from each other for mounting purposes, whereby a first part of the inventive composite reflector and a second part of the inventive composite reflector is obtained, each of the parts comprising a reflective layer, optionally a shaping layer and a fixation layer. The fixation layers of the two parts can then be disposed face to face with each other with spokes of a bicycle wheel in between, and connected again to each other, whereby the composite reflector is safely mounted on the spokes of the bicycle wheel.

The invention will now be further described by way of exemplary embodiments with reference to the accompanying drawings in which:
- Fig. 1: shows a perspective view of a composite reflector according to one embodiment of the invention;
- Fig. 2: shows a sectional schematic view of the composite reflector of Fig. 1;
- Figs. 3a and 3b: show a composite reflector and a composite reflector mounted to the spokes of a bicycle wheel according to a second embodiment of the invention; and
- Fig. 4: shows an essentially bow-shaped composite reflector according to another embodiment of the invention mounted on the spokes of a bicycle wheel.

Like reference numerals indicate like or similar functions.

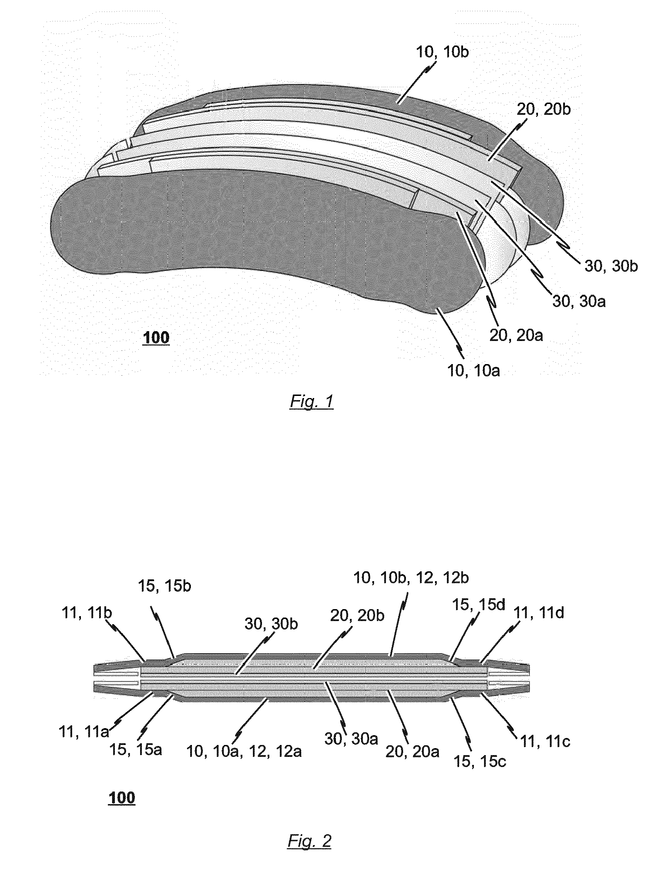

Fig. 1 and 2 both shows schematic views of a composite reflector 100 comprising, subsequently, a first reflective layer 10a, a first shaping layer 20a, a first fixation layer 30a, a second fixation layer 30b, a second shaping layer 20b and a second reflective layer 10b.

The first layers 10a, 20a, 30a form a first part of the composite reflector 100 according to the first embodiment. Likewise, the second layers 10b, 20b, 30b form a second part of the composite reflector 100. The fixation layers 30a, 30b are equipped with suitable hook-and-loop connecting means, i.e. one of the fixation layers 30a or 30b is equipped with the loop side and the other of the fixation layers 30b, 30a is equipped with the corresponding hook side of the hook-and-loop fixation elements. Hence, the first part and the second part of the composite reflector 100 can be detached from each other temporarily, i.e. for mounting purposes on the spokes of a bicycle wheel or the like.

Both the reflective layers 10a, 10b, the fixation layers 30a, 30b and the shaping layers 20a, 20b are made from elastically deformable, cuttable materials, such that elastic deformation due to bending or the like does impact the integrity of the composite reflector 100. Due to the cuttability, the shape of the composite reflector 100 can be changed by the user just by cutting the material into another shape, thereby adapting the shape of a composite reflector 100 to the requirements of the installation environment.

The reflective layers 10a, 10b are made of a reflective polyester material of a signal colour, commonly used in traffic signalling means such as green, yellow, orange or red.

The shaping layers 20a, 20b are made of elastically deformable foam material in order to reduce the overall weight of the composite reflector 100.

The first reflective layer 10a comprises a first portion 11a on the left side of figures 1 and 2 and another first portion 11c on the right side of figures 1 and 2. Likewise, the second reflective layer 10b comprises a first portion 11b on the left and another first portion 11d on the right.

The first reflective layer 10a further comprises a second portion 12a, which is connected to the first portions 11a, 11c by corresponding transition portions 15a, 15c each connecting the first portions 11a, 11c to the second portion 12a by a linear slope 16.

The reflective layers 10a, 10b are preferably reflective foils of class 1, 2 or 3.

In the same manner as described with respect to the first reflective layer 10a, the first portions 11b, 11d of the second reflective layer 10b are connected to the second portion 12b of the second reflective layer 10b by corresponding transition portions 15b, 15d under a slope 16 of the transition portion 15b, 15d.

Hence, first portions 11a, 11c of the first reflective layer 10a extend within a first plane A which is substantially flat. The second portion 12a of the first reflective layer 10a extends within a second plane B, which is also substantially flat and substantially parallel to the first plane A.

Likewise, the first portions 11b, 11d of the second reflective layer 10b extend within a different first plane C, which is substantially flat. The second portion 12b of the second reflective layer 10b extends within a different second plane D, which is also substantially flat and which is substantially parallel to another first plane C.

In this manner, a composite reflector 100 is obtained which reflects impacting from any directions, i.e. impacting from any impact angle, when lighted up. Hence, the scope of reflection is considerably more than 90° impact angle, i.e. substantially more than an impact angle of incident light impacting from a direction substantially perpendicular to any of the planes A, B, C, D.

Hence, in the middle section of the composite reflector 100, due to the special shaping of the reflective layers 10a, 10b supported by the shaping layers 20a, 20b, this "bubble" effect shows reflections in all kinds of directions when lighted up.

Moreover, the composite reflector 100 is very easy to install within a very short mounting time and is possible without machines without machines or battery equip or other tools.

Since the shape and the dimensions of the composite reflector 100 are fully customisable, a function of the composite reflector 100 which is appropriate to the vehicle it is attached to, and in particular appropriate to the wheel such as the bicycle wheel it is attached to, can be obtained.

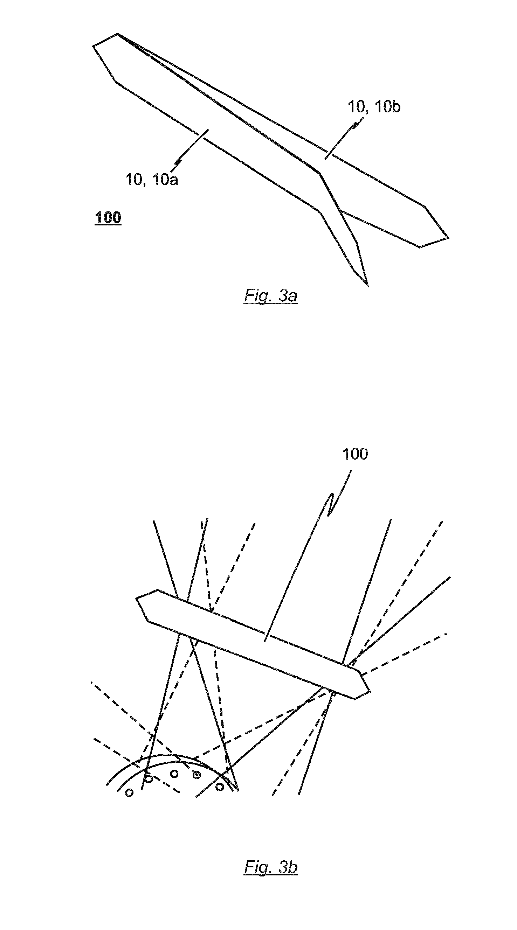

Fig. 3 shows a perspective view of another embodiment of the inventive composite reflector 100. Here, the fixation layer 30a, 30b of the composite reflector 100 are equipped with a pressure-sensitive adhesive and allow for easy mounting on the spokes of a bicycle wheel, as shown in Fig. 3b. Mounting is performed in a very easy manner just by pressing together the ends of the composite reflector 100 with the spokes in between, thereby activating the pressure sensitive adhesive and allowing for a very reliable mounting in between the spokes.

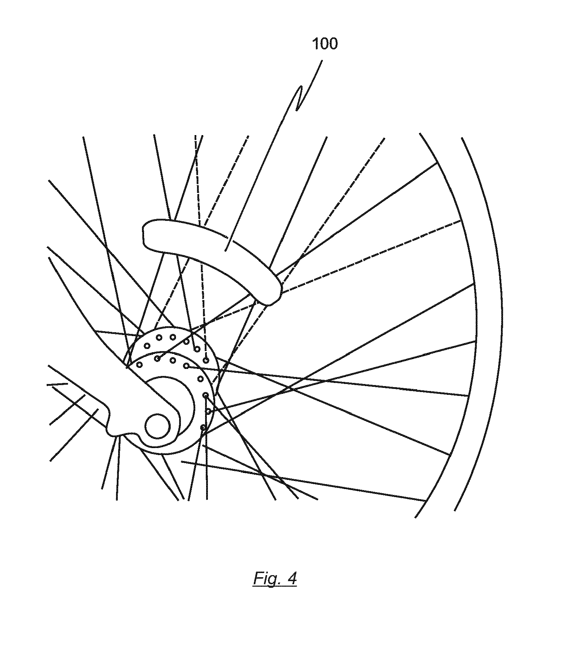

Fig. 4 shows a perspective view on an essentially bow-shaped composite reflector 100 when mounted to the spokes of a bicycle wheel. Composite reflector 100 of this third embodiment of the invention, as shown in Fig. 4, is completely committed to the function appropriate to the bicycle wheel due to its bow-shaped extension.

### List of reference signs

- 10, 10a, 10b: reflective layer
- 11, 11a, 11b, 11c, 11d: first portion of the reflective layer
- 12, 12a, 12b: second portion of the reflective layer
- 15, 15a, 15b, 15c, 15d: transition portion
- 16: slope of the transition portion
- 20, 20a, 20b: shaping layer
- 30, 30a, 30b: fixation layer
- 100: composite reflector
- A, C: first plane
- B, D: second plane

## Claims

1. Composite reflector (100) for assembly on a part of a vehicle, in particular on a lateral part of a vehicle and preferably at the spokes of a bicycle wheel, wherein the composite reflector comprises at least one reflective layer (10) and at least one fixation layer (30), wherein at least one first portion (11) of the at least one reflective layer (10) extends within a first substantially flat plane (A) and wherein at least one second portion (12) of the at least one reflective layer (10) extends within a second substantially flat plane (B), the first and the second substantially flat planes (A, B) being substantially parallel to one another.

2. Composite reflector (100) according to claim 1, wherein the at least one first portion (11) and the at least one second portion (12) are merged into one another by at least one transition portion (15), the at least one transition portion (15) connecting the first portion and the second portion at a linear slope (16) of less than 90° or at a non-linear slope.

3. Composite reflector (100) according to any of the preceding claims,
wherein the composite reflector is adapted to provide a reflective range form 0° to 180° with respect to any of the substantially flat planes (A, B).

4. Composite reflector (100) according to any of the preceding claims,
wherein the composite reflector further comprises at least one shaping layer (20), wherein the at least one shaping layer (20) is adapted to dislocate the at least one second portion of the at least one reflective layer (10) outside the first substantially flat plane (A) in order to make it extend within the second substantially flat plane (B).

5. Composite reflector (100) according to claim 4, wherein the at least one shaping layer (20) is located in between the at least one fixation layer (30) and the at least one reflective layer (10).

6. Composite reflector (100) according to claim 4 or 5, wherein the at least one shaping layer is made of a foam material, preferably an elastically deformable foam material.

7. Composite reflector (100) according to any of the preceding claims,
wherein the at least one reflective layer (10) is made of an elastically deformable material.

8. Composite reflector (100) according to any of the preceding claims,
wherein the at least one reflective layer (10) is a coloured reflective layer, the colour being at least one of a signal colour, in particular one of a signal colour commonly used in traffic signalling means.

9. Composite reflector (100) according to any of the preceding claims,
wherein the at least one fixation layer (30) comprises at least one of an adhesive, preferably one of a pressure sensitive adhesive, a butyl adhesive, an acrylic adhesive, a rubber-based adhesive or a silicone-based adhesive, or at least one of the loop side or the hook side of a hook-and-loop fixation means.

10. Composite reflector (100) according to any of the proceeding claims,
wherein all of the layers (10, 20, 30) of the composite reflector are adapted to be cuttable in order to render the circumferential shape of the composite reflector user-definable.

11. Composite reflector (100) according to any of the preceding claims,
wherein the composite reflector is essentially straight-shaped.

12. Composite reflector (100) according to any of claims 1 to 10, wherein the composite reflector is essentially bow-shaped.

13. Composite reflector (100) according to any of the preceding claims,
wherein the composite reflector comprises consecutively:
- a first reflective layer (10a) having at least one first portion (11a) and at least one second portion (12a), the portions (11a, 12a) each extending in different substantially flat planes (A, B), the planes being substantially parallel to one another;
- optionally a first shaping layer (20a);
- a first fixation layer (30a) being at least partially equipped with one of hook elements or loop elements of a hook-and-loop fixation;
- a second fixation layer (30b) being at least partially equipped with the corresponding counterpart of either hook elements or loop elements used on the first fixation layer (30a) to form a detachable connection using these elements;
- optionally a second shaping layer (20b); and
- a second reflective layer (10b), the second reflective layer preferably having at least one first portion (11b) and at least one second portion (12b), the portions (12a, 12b) preferably each extending in different substantially flat planes (C, D) which are substantially parallel to one another.
